# FASCICULE DE BREVET EUROPEEN

(11) **EP 2 403 690 B1**
(45) Date de publication et mention de la délivrance du brevet: **29.05.2013**
(21) Numéro de dépôt: 10710077.8
(22) Date de dépôt: 19.02.2010
(51) Int. Cl.: B25J 9/04, B25J 15/00, A01J 25/16

(54) **ENSEMBLE ROBOTISE POUR LE RETOURNEMENT DE BLOCS DE MOULES A FROMAGE**
ROBOTERANORDNUNG ZUM UMDREHEN VON BLÖCKEN VON KÄSEFORMEN
ROBOT ASSEMBLY FOR TURNING OVER BLOCKS OF CHEESE MOULDS

(30) Priorité: 06.03.2009 FR 0901036
(43) Date de publication de la demande: 11.01.2012
(73) Titulaire: Equipements Techniques des Industries Alimentaires et Connexes-TECNAL, 79000 Niort (FR)
(72) Inventeur: BARILLON, Frédéric, F-79410 Echire (FR)
(74) Mandataire: Gaillarde, Frédéric F. Ch.
(86) Numéro de dépôt international: PCT/FR2010/050296
(87) Numéro de publication internationale: WO 2010/100362

(56) Documents cités:
- DE-A1- 10 347 167
- NL-C1- 1 028 256
- TECNAL: "Mécanisation : l'attrait des robots" INTERNET ARTICLE, [Online] mars 2007 (2007-03), XP002546657 Extrait de l'Internet: URL:HTTP://WWW.TECNAL.FR/UPLOAD/TECNAL%20I NFO%20N%C2%B0%2019.PDF> [extrait le 2009-09-16] cité dans la demande

## Description

La présente invention se rapporte à un ensemble robotisé pour la retourne et le transfert d'un ensemble de préparations alimentaires et à un procédé mettant en oeuvre un tel ensemble robotisé.

Au cours de leur fabrication, certains aliments tels que les fromages subissent différentes étapes de transformation. Certaines de ces étapes nécessitent le retournement des produits alimentaires, on citera par exemple dans le cas des fromages, les étapes de coagulation, de moulage, d'égouttage ou d'affinage. Pour réaliser une telle opération de retournement, différentes possibilités sont connues.

On connait par exemple le retournement manuel. Celui-ci nécessite l'intervention d'un opérateur sur le poste, et étant donné qu'il ne permet que de petites cadences de production, il est quasiment exclusivement réservé à la fabrication de fromages très fragiles dont la préparation demande le plus grand soin.

Il est également connu de procéder au retournement à l'aide d'un retourneur. La demande FR 2 807 918, déposée par la demanderesse, traite des retourneurs. Un tel appareillage a pour fonction de retourner un ensemble sur lequel peuvent être répartis des moules à fromage, à une cadence de production relativement élevée. Cependant, il est strictement limité au processus de retournement et nécessite des dispositifs associés, par exemple, la présence d'un dépileur et d'un empileur.

La demanderesse a également mis au point un robot dit « cartésien » pour le retournement de plateaux de moule. Un tel robot comprend un chariot monté coulissant sur un support vertical, un bras monté articulé dans un plan horizontal par rapport à ce chariot, et une tête de retourne montée pivotante autour d'un axe horizontal par rapport à ce bras.

Ce robot « cartésien » de la technique antérieure, cité par exemple dans le document XP002546657 « Mécanisation : l'attrait des robots », et visible sur le site Internet de la demanderesse (voir la page 2 du document www.tecnal.fr/upload/tecnal%20INFO%20N%C2%B0%2019.pdf), est un robot à deux axes + un axe de retourne, convenant à des utilisations limitées (typiquement : empilage/dépilage/retourne individuelle à partir d'une pile d'objet).

Face à la demande sans cesse croissante de production et de conditionnement en grande série d'aliments, il est important de gagner en efficacité sur toutes les étapes depuis la réception des matières premières jusqu'à l'élaboration du produit fini. Dans ce cadre, on a de plus en plus en plus recours à des robots très sophistiqués, aux possibilités de déplacement pratiquement illimitées.

Dans le cas des fromages, on a ainsi recours à l'utilisation de robots polyarticulés six axes, (analogues à ceux utilisés dans les chaînes de montage d'automobiles), qui permettent la retourne des fromages ainsi que toute une gamme de mouvements très complexes.

L'un des inconvénients des robots six axes tient en particulier à leur mode de fonctionnement. Les tâches effectuées par ces robots sont gérées par un logiciel fourni avec le robot, de sorte que l'opérateur ne peut pas maîtriser tous les paramètres, et notamment il ne peut pas influer sur la vitesse de retourne. Ceci provoque une durée de temps de cycle, c'est-à-dire une durée séparant la répétition de deux actions similaires par le robot, souvent trop longue et incompatible avec des cadences de production élevées.

Aussi, ces robots six axes sont pilotés par des programmes qui limitent considérablement les possibilités de déplacement du bras articulé du robot, parce qu'elles interdisent certaines configurations, comme celles qui présentent un alignement du quatrième axe avec le sixième axe.

De plus, le couple et la vitesse de rotation autour du sixième axe sont souvent insuffisants pour la manutention d'objets lourds. Ainsi, les robots six axes ne permettent pas toujours de garantir un niveau de fiabilité compatible avec des cadences élevées, tout en respectant les normes de fabrication imposées.

La présente invention vise à éviter les inconvénients précités et à améliorer les dispositifs du domaine de la robotique de l'art antérieur, notamment pour le retournement de préparations fromagères.

A cet effet, l'invention a pour objet selon un premier aspect un ensemble robotisé pour le retournement et le transfert, d'un premier endroit vers un second endroit, d'au moins un ensemble de préparations alimentaires, tel qu'un bloc de moules à fromage, comprenant :
- un robot de type quatre axes qui comprend un socle et un bras ;
- une tête de retourne rapportée sur une extrémité distale du bras.

Un tel ensemble robotisé est de conception simple, est robuste et offre un couple compatible avec le déplacement d'objets lourds. D'autre part, l'association de la tête de retourne avec le robot de type quatre axes dont la morphologie et le fonctionnement sont présentés en détail dans la suite de la présente description, confère une liberté de mouvements compatible notamment avec l'accomplissement simultané de rotations et de translations.

On notera que le « premier endroit » et le « deuxième endroit » susmentionnés peuvent éventuellement être identiques.

Le terme « robot de type quatre axes », au sens de la présente invention, inclut non seulement les robots munis de quatre axes, mais également tout robot de plus de quatre axes dont des axes ont été neutralisés, c'est-à-dire maintenus immobiles, afin qu'ils fonctionnent comme des robots avec quatre axes pendant les étapes de retourne.

De tels robots peuvent éventuellement effectuer des tâches avec tous leurs axes opérationnels, c'est-à-dire non neutralisés, pendant les étapes de transfert sans retourne. L'homme du métier sait comment faire de telles modifications pour faire fonctionner un robot de plus de quatre axes, au moins en partie, comme un robot quatre axes.

Le terme « rapportée » concernant la tête de retourne signifie qu'une tête de retourne spécifique, conçue indépendamment du robot et ne faisant donc pas partie de celui-ci, est fixée à l'extrémité du robot.

Un tel ensemble robotisé permet de faire du temps masqué. Pendant le retournement des préparations alimentaires, d'autres opérations sont dès lors réalisables par l'ensemble robotisé en simultané. Ceci réduit considérablement les temps de cycle et améliore les cadences de production. Le fonctionnement d'un tel dispositif est davantage expliqué dans la suite de la présente description, et plus particulièrement dans les passages se rapportant au procédé associé au fonctionnement du présent ensemble robotisé.

Suivant d'autres caractéristiques optionnelles de l'ensemble robotisé au sens de la présente invention :
- l'articulation de l'extrémité distale comprend au moins un joint tournant ;
- au moins un desdits joints tournants est traversé par un des éléments sélectionné parmi un circuit d'air comprimé et un circuit électrique ;
- la tête de retourne comprend : un châssis ; un moteur contenant un rotor et un stator ; un arbre d'entraînement monté en rotation autour d'un axe de retournement par liaison avec le rotor du moteur ; et un préhenseur monté à l'une des extrémités de l'arbre d'entraînement ;
- l'axe de l'articulation de l'extrémité distale est sensiblement perpendiculaire à l'axe de retournement ;
- ledit moteur est un moteur électrique ;
- ledit préhenseur est muni d'au moins un capteur pour détecter la position d'au moins un ensemble de préparations alimentaires ;
- ledit préhenseur comporte au moins l'un des éléments sélectionné parmi un vérin pneumatique et un actionneur électrique ;
- ledit arbre d'entraînement est creux ;
- ledit arbre d'entraînement creux est traversé par au moins un des éléments sélectionné parmi un circuit d'air comprimé et un circuit électrique ;

Selon un deuxième aspect, l'invention a pour objet un procédé de retournement et de transfert d'un premier endroit vers un second endroit d'au moins un ensemble de préparations alimentaires, tel qu'un bloc de moules à fromage, mettant en oeuvre l'un des modes de réalisation d'ensemble robotisé tel que décrit précédemment, dans lequel l'ensemble robotisé effectue les opérations suivantes :
(a)- le robot approche ladite tête de retourne de l'ensemble de préparations alimentaires localisées audit premier endroit ;
(b)- ledit préhenseur saisit ledit ensemble ;
(c)- ladite tête retourne ledit ensemble suivant une rotation déterminée autour dudit deuxième axe, par exemple de 180° ;
(d)- le robot transfère ledit ensemble audit second endroit ; et l'étape (c) s'effectue au moins en partie pendant l'étape (d).

L'ensemble robotisé au sens de la présente invention effectue des opérations de retourne d'au moins un ensemble de préparations alimentaires, par exemple de préparations fromagères, et peut assurer le transfert de l'ensemble à un emplacement différent du lieu où le robot effectue la préhension préalable à la retourne.

Le robot de l'invention réalise la retourne, au moins en partie, pendant le mouvement de transfert, permettant ainsi de réduire le temps de cycle, et par suite, participant à l'augmentation des cadences de production.

D'autres caractéristiques et avantages de l'invention apparaîtront à la lumière de la description qui va suivre en référence au figures annexées, dans lesquelles :
- la figure 1 représente, en vue de détail, une coupe de profil de la partie basse de la tête de retourne ;
- la figure 2 représente une vue de côté de l'ensemble robotisé de l'invention ;
- la figure 3 représente, en vue de détail, une coupe de profil de l'articulation de la tête de retourne.

Le terme « endroit » au sens de la présente invention signifie le lieu où s'effectue la préhension du bloc de préparation alimentaires, ou la dépose de ce bloc suite aux opérations de retourne. Il peut s'agir d'un lieu de préhension ou de dépose situé sur un convoyeur d'amenée d'un ensemble de préparations alimentaires. Le terme « endroit » englobe également le sommet d'une pile de préparations alimentaires, tel que le haut d'une pile de bloc de moules à fromage.

Le terme « bloc de moules » englobe notamment un plateau avec un ensemble de moules alimentaires disposés sur toute sa surface.

Le terme « transfert » au sens de la présente invention signifie un déplacement global d'un premier endroit point vers un deuxième endroit, étant noté que ces deux endroits peuvent être identiques (retour au point de départ).

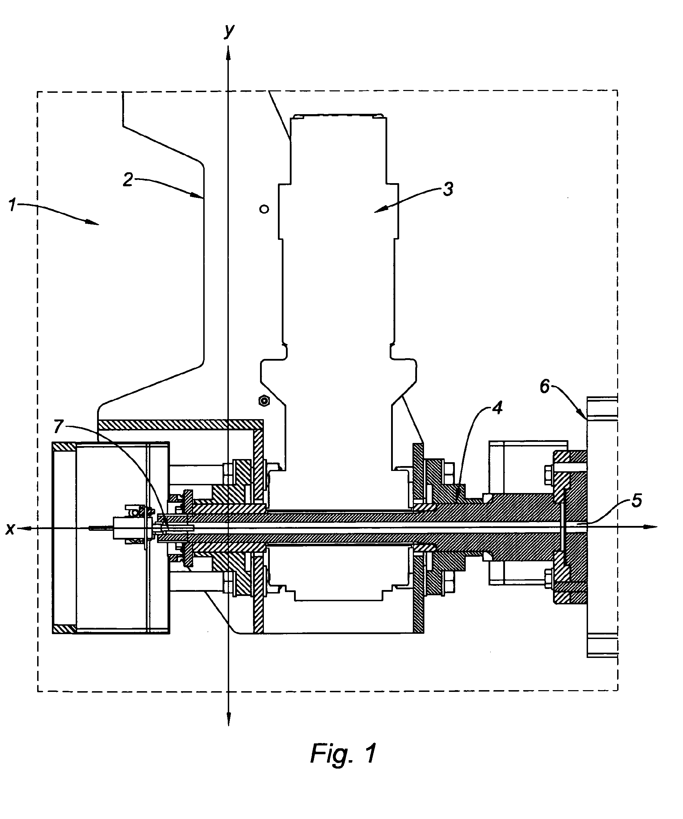

La figure 1 représente une vue en coupe d'un mode de réalisation de tête de retourne 1, avec un châssis 2 sur lequel est monté un moteur 3, de préférence un moteur électrique. Le moteur 3 est accouplé à un arbre d'entraînement 4, qui peut présenter une cavité 5. L'axe principal Y du châssis 2, représenté sur la figure 1 suivant la direction verticale, peut être sensiblement perpendiculaire à l'axe de rotation X de l'arbre d'entraînement 4, représenté sur la figure 1 suivant la direction horizontale. A l'extrémité la plus distale de la tête de retourne 1, l'arbre 4 est muni d'un préhenseur 6 pour saisir des ensembles de préparations alimentaires.

Le préhenseur 6 peut évenventuellement être équipé d'au moins un capteur, non représenté, destiné à indiquer la présence d'un des éléments à saisir par le préhenseur. L'homme du métier de la robotique sait comment placer de tels capteurs en fonction des systèmes de traitement de données de l'état de l'art. Il sait également quel dispositif de commande utiliser en connection avec un tel système de traitement des données transmises par le capteur.

Typiquement, les données acquises par le capteur sont transmises au travers d'un circuit électrique à un système de traitement de données, et lorsqu'il y a détection de la présence d'un élément à saisir en vis-à-vis du préhenseur 6, un dispositif de commande ordonne la préhension.

La préhension peut être commandée au travers d'un circuit pneumatique relié à un vérin, non représenté, du préhenseur.

La cavité 5, éventuellement ménagée dans l'arbre 4, est destinée à recevoir, le cas échéant, un circuit électrique et/ou un circuit pneumatique. L'insertion d'au moins l'un de ces deux circuits se fait, par exemple, au travers de joints tournants tel que le joint tournant 7. L'incorporation des circuits électrique et/ou pneumatique dans la structure permet d'éviter la présence de câbles qui imposent des contraintes sur les axes, en particulier pendant les rotations.

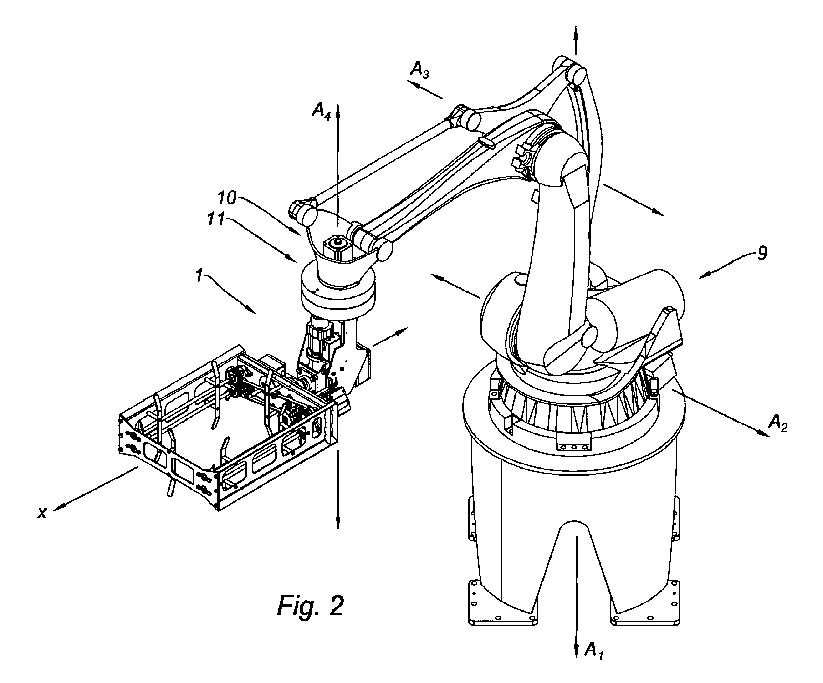

Comme illustré à la figure 2, l'ensemble robotisé 8 de l'invention comprend un robot de type quatre axes 9 et une tête de retourne 1. Le robot de type quatre axes équipé d'un bras articulé est connu en soi, et utilisé par exemple pour les chaînes de montage d'automobiles ; il présente en plus d'une extrémité distale 10 articulée autour d'un quatrième axe A4, un premier axe d'articulation A1 vertical et, des seconds A2 et troisièmes axes d'articulation A3 horizontaux.

Selon un mode de réalisation particulier de l'invention, l'extrémité distale 10 du robot de type quatre axes 9 est prévue pour recevoir une articulation 11 de la tête de retourne autour du quatrième axe A4. Une telle articulation 11 est constituée d'une part d'une platine fixe 12 qui peut être fixée sur l'extrémité distale 10, et d'autre part d'une platine pivotante 13 apte à pivoter par rapport à la platine fixe 12 autour de l'axe A4. L'axe de rotation X de l'arbre d'entrainement 4, qui forme en principe le cinquième axe de l'ensemble robotisé, est de préférence sensiblement perpendiculaire au quatrième axe A4.

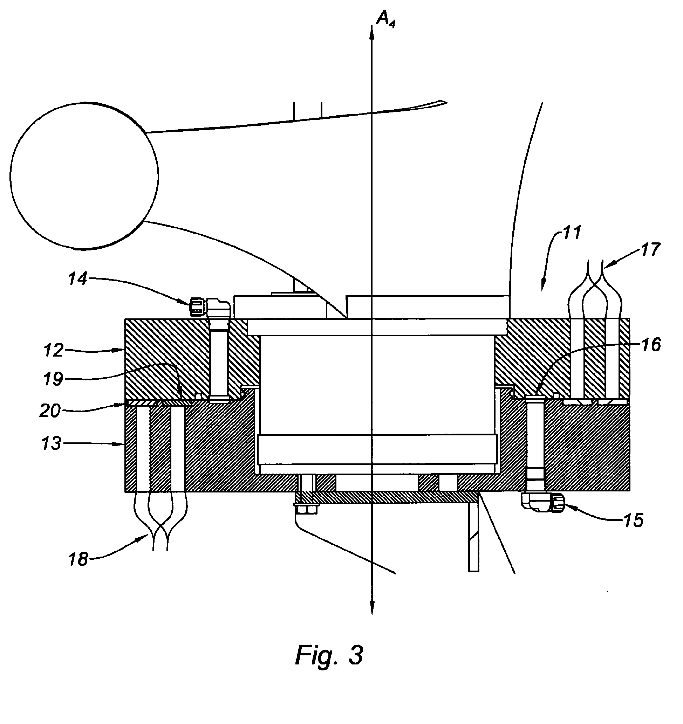

Il peut également être prévu, comme représenté à la figure 3, une entrée d'air comprimé 14, sur la platine fixe 12, reliée à une sortie d'air comprimé 15, située sur la platine pivotante 13, à l'aide d'un joint tournant 16. De la même manière, on peut prévoir une entrée électrique 17, sur la platine fixe 12, reliée à une sortie électrique 18, située sur la platine pivotante 13, à l'aide des joints tournants 19 et 20. De cette façon, l'incorporation des circuits électrique et/ou pneumatique dans l'articulation 11 permet d'éviter la présence de câbles qui imposent des contraintes et risquent de gêner les rotations. Les connexions électriques qui transitent par l'articulation 11 servent notamment à alimenter le moteur 3 et éventuellement les capteurs.

Un ensemble robotisé 8 tel que précedemment décrit peut, en particulier, saisir et extraire un bloc de moules au sommet d'une pile d'un ensemble de blocs de moule avec le préhenseur 6. Cette opération qui correspond au transfert partiel du bloc de moule d'une pile vers un deuxième endroit, est usellement dénommée le dépilage. Après avoir commencé à dépiler et au cours du transfert du bloc de moules, le moteur 3 de la tête de retourne 1 de l'ensemble robotisé 8 provoque la retourne du bloc de moules, suivant une rotation de 180° autour de l'axe X. Pendant cette opération de retourne, la partie du dispositif constitué par le robot quatre axes poursuit le transfert vers le deuxième endroit, par exemple, une pile destinée à recevoir des blocs de moules retournés. Dans ce dernier cas, on parle d'une étape d'empilage.

Un tel ensemble robotisé 8 permet donc, grâce à son mode de fonctionnement, et à sa conception simple et robuste, d'effectuer les opérations de retourne et de transfert des blocs en simultané. Il est possible de cumuler différentes actions en simultané ou que ces actions soient partiellement superposées dans le temps. Ainsi, il est notamment possible de programmer l'ensemble robotisé 8 afin qu'il procède à l'opération de retourne au cours du dépilage et/ou de l'empilage.

La tête de retourne de l'ensemble robotisé 8 peut être commandée indépendamment du reste de l'ensemble, contrairement au robot six axes de l'art antérieur où les organes de commande sont intégralement gérés par le logiciel de pilotage. De cette manière, l'opérateur a la possibilité d'agir, d'une part, sur la programmation des dispositifs de commande du robot de type quatre axes, et d'autre part, de manière indépendante mais synchronisée, sur la programmation des tâches de retourne. Une telle configuration offre un nombre important de possibilités de réglage, et, permet de sélectionner les combinaisons les plus avantageuses en terme de durée et de trajectoire. Tout ceci permet de réduire les temps de cycle et d'augmenter les cadences de production.

Bien entendu, la présente invention n'est nullement limitée aux modes de réalisation décrits et représentés, fournis à titre de simples exemples. C'est ainsi que l'on peut généraliser l'invention à un robot de plus de quatre axes, tel qu'un robot six axes, sur lequel on neutralise certains axes de manière à ne garder que quatre axes, et par suite, faire fonctionner un tel robot comme un quatre axes. L'homme du métier de la robotique sait comment effectuer de telles modifications.

## Revendications

1. Ensemble robotisé (8) pour le retournement et le transfert, d'un premier endroit vers un second endroit, d'au moins un ensemble de préparations alimentaires, tel qu'un bloc de moules à fromage comprenant :
- un robot de type quatre axes (9) qui comprend un socle et un bras ;
- une tête de retourne (1) rapportée sur une extrémité distale (10) du bras.

2. Ensemble robotisé (8) selon la revendication 1, dans lequel l'articulation de l'extrémité distale (10) comprend au moins un joint tournant (16, 19, 20).

3. Ensemble robotisé (8) selon la revendication 2, **caractérisé en ce que** au moins un desdits joints tournants (16, 19, 20) est traversé par un des éléments sélectionné parmi un circuit d'air comprimé et un circuit électrique.

4. Ensemble robotisé (8) selon l'une quelconque des revendications précédentes, **caractérisé en ce que** la tête de retourne (1) comprend :
- un châssis (2) ;
- un moteur (3) contenant un rotor et un stator;
- un arbre d'entraînement (4) monté en rotation autour d'un axe de retournement (X) par liaison avec le rotor du moteur (3) ; et
- un préhenseur (6) monté à l'une des extrémités de l'arbre d'entraînement (4).

5. Ensemble robotisé (8) selon la revendication 4, **caractérisé en ce que** l'axe de l'articulation de l'extrémité distale (A4) est sensiblement perpendiculaire audit axe de retournement (X).

6. Ensemble robotisé (8) selon l'une des revendication 4 ou 5, **caractérisé en ce que** ledit moteur (3) est un moteur électrique.

7. Ensemble robotisé (8) selon l'une quelconques des revendications 4 à 6, **caractérisé en ce que** ledit préhenseur (6) est muni d'au moins un capteur pour détecter la position d'au moins un ensemble de préparations alimentaires.

8. Ensemble robotisé (8) selon l'une quelconque quelconques des revendications 4 à 7, **caractérisé en ce que** ledit préhenseur (6) comporte au moins l'un des éléments sélectionné parmi un vérin pneumatique et un actionneur électrique.

9. Ensemble robotisé (8) selon l'une quelconque des revendications 4 à 8, **caractérisé en ce que** ledit arbre d'entraînement (4) est creux.

10. Ensemble robotisé (8) selon la revendication 9, **caractérisé en ce que** ledit arbre d'entraînement (4) creux est traversé par au moins un des éléments sélectionné parmi un circuit d'air comprimé et un circuit électrique.

11. Procédé de retournement et de transfert d'un premier endroit vers un second endroit d'au moins un ensemble de préparations alimentaires, tel qu'un bloc de moules à fromage, mettant en oeuvre un ensemble robotisé (8) selon l'une quelconque des revendications 4 à 10, dans lequel l'ensemble robotisé (8) effectue les opérations suivantes :
(a)- le robot (9) approche ladite tête de retourne (1) de l'ensemble de préparations alimentaires localisées audit premier endroit ;
(b)- ledit préhenseur (6) saisit ledit ensemble ;
(c)- ladite tête (1) retourne ledit ensemble de retournement suivant une rotation déterminée autour dudit axe de retournement (X), par exemple de 180° ;
(d)- le robot (9) transfère ledit ensemble audit second endroit ; et l'étape (c) s'effectue au moins en partie pendant l'étape (d).

## Patentansprüche

1. Roboteranordnung (8) zum Wenden und zum Übertragen mindestens einer Anordnung von Lebensmittelzubereitungen, wie beispielsweise eines Käseformenblocks, von einer ersten Stelle zu einer zweiten Stelle, die umfasst:
- einen Roboter vom Typ vier Achsen (9), der einen Sockel und einen Arm umfasst,
- einen Wendekopf (1), der auf einem distalen Ende (10) des Arms angebracht ist.

2. Roboteranordnung (8) nach Anspruch 1, wobei das Gelenk des distalen Endes (10) mindestens eine Drehverbindung (16, 19, 20) umfasst.

3. Roboteranordnung (8) nach Anspruch 2, **dadurch gekennzeichnet, dass** mindestens eine der Drehverbindungen (16, 19, 20) von einem der Elemente durchquert wird, die aus einem Druckluftkreis und einem elektrischen Kreis ausgewählt sind.

4. Roboteranordnung (8) nach einem der vorangehenden Ansprüche, **dadurch gekennzeichnet, dass** der Wendekopf (1) umfasst:
- ein Gestell (2),
- einen Motor (3), der einen Rotor und einen Stator enthält,
- eine Antriebswelle (4), die durch Verbindung mit dem Rotor des Motors (3) rotierend um eine Wendeachse (X) montiert ist, und
- einen Greifer (6), der an einem der Enden der Antriebswelle (4) montiert ist.

5. Roboteranordnung (8) nach Anspruch 4, **dadurch gekennzeichnet, dass** die Achse des Gelenks des distalen Endes (A4) etwa senkrecht zur Wendeachse (X) ist.

6. Roboteranordnung (8) nach einem der Ansprüche 4 oder 5, **dadurch gekennzeichnet, dass** der Motor (3) ein Elektromotor ist.

7. Roboteranordnung (8) nach einem der Ansprüche 4 bis 6, **dadurch gekennzeichnet, dass** der Greifer (6) mit mindestens einem Sensor ausgestattet ist, um die Position mindestens einer Anordnung von Lebensmittelzubereitungen festzustellen.

8. Roboteranordnung (8) nach einem der Ansprüche 4 bis 7, **dadurch gekennzeichnet, dass** der Greifer (6) mindestens eines der Elemente aufweist, die aus einem pneumatischen Zylinder und einem elektrischen Aktuator ausgewählt sind.

9. Roboteranordnung (8) nach einem der Ansprüche 4 bis 8, **dadurch gekennzeichnet, dass** die Antriebswelle (4) hohl ist.

10. Roboteranordnung (8) nach Anspruch 9, **dadurch gekennzeichnet, dass** die hohle Antriebswelle (4) von mindestens einem der Elemente durchquert wird, die aus einem Druckluftkreis und einem elektrischen Kreis ausgewählt sind.

11. Wende- und Übertragungsverfahren von einer ersten Stelle an eine zweite Stelle mindestens einer Anordnung von Lebensmittelzubereitungen, wie beispielsweise eines Käseformblocks, das eine Roboteranordnung (8) nach einem der Ansprüche 4 bis 10 umsetzt, wobei die Roboteranordnung (8) die folgenden Vorgänge durchführt:
(a) der Roboter (9) nähert den Wendekopf (1) der Anordnung von Lebensmittelzubereitungen an, die an einer ersten Stelle lokalisiert sind,
(b) der Greifer (6) erfasst die Anordnung,
(c) der Kopf (1) wendet die Wendeanordnung gemäß einer bestimmten Drehung um die Wendeachse (X), beispielsweise um 180°,
(d) der Roboter (9) überträgt die Anordnung an die zweite Stelle, und Schritt (c) erfolgt mindestens teilweise während Schritt (d).

## Claims

1. A robot assembly (8) for turning over and transferring, from a first location to a second location, at least one set of food preparations, such as a block of cheese molds, comprising:
- a four-axis robot (9) including a base and an arm;
- a turning head (1) mounted on a distal end (10) of the arm.

2. The robot assembly (8) according to claim 1, wherein the articulation of the distal end (10) comprises at least one swing joint (16, 19, 20).

3. The robot assembly (8) according to claim 2, **characterized in that** at least one of said swing joints (16, 19, 20) is passed through by one of the elements selected from among a compressed air circuit and an electrical circuit.

4. The robot assembly (8) according to any one of the preceding claims, **characterized in that** the turning head (1) comprises:
- a chassis (2);
- a motor (3) containing a rotor and a stator;
- a drive shaft (4) rotatably mounted around a turning axis (X) by connection with the rotor of the motor (3); and
- a gripping member (6) mounted at one of the ends of the drive shaft (4).

5. The robot assembly (8) according to claim 4, **characterized in that** the axis of the articulation of the distal end (A4) is substantially perpendicular to said turning axis (X).

6. The robot assembly (8) according to one of claims 4 or 5, **characterized in that** said motor (3) is an electric motor.

7. The robot assembly (8) according to any one of claims 4 to 6, **characterized in that** said gripping member (6) is provided with at least one sensor to detect the position of at least one set of food preparations.

8. The robot assembly (8) according to any one of claims 4 to 7, **characterized in that** said gripping member (6) includes at least one of the elements selected from among a pneumatic cylinder and an electric actuator.

9. The robot assembly (8) according to any one of claims 4 to 8, **characterized in that** said drive shaft (4) is hollow.

10. The robot assembly (8) according to claim 9, **characterized in that** said hollow drive shaft (4) is passed through by at least one of the elements selected from among a compressed air circuit and an electrical circuit.

11. A method for turning and transferring at least one set of food preparations, such as a block of cheese molds, from a first location to a second location using a robot assembly (8) according to any one of claims 4 to 10, wherein the robot assembly (8) performs the following operations:
(a)- the robot (9) brings the turning head (1) close to the set of food preparations located in said first location;
(b)- said gripping member (6) grasps said assembly;
(c)- said head (1) turns said turning assembly by a predetermined rotation around said turning axis (X), for example 180°;
(d)- the robot (9) transfers said assembly to said second location; and step (c) is at least partly done during step (d).
